# EUROPÄISCHE PATENTANMELDUNG

(11) **EP 4 703 079 A1**
(43) Veröffentlichungstag der Anmeldung: **04.03.2026**
(21) Anmeldenummer: 25195083.8
(22) Anmeldetag: 11.08.2025
(51) Int. Cl.: B23K 26/06, B23K 26/073, B23K 26/14, B23K 26/38

(54) **VERFAHREN ZUM LASERSCHNEIDEN, VERWENDUNG EINER LASERSCHNEIDANLAGE UND LASERSCHNEIDANLAGE**

(30) Priorität: 26.08.2024 DE 102024124342
(71) Anmelder: TRUMPF Laser- und Systemtechnik SE, 71254 Ditzingen (DE)
(72) Erfinder: Seebach, Johannes, 70193 Stuttgart (DE); Kramlich, Olga, 75175 Pforzheim (DE); Weingärtner, Timo, 75417 Mühlacker (DE)
(74) Vertreter: Trumpf Patentabteilung

(57) **Zusammenfassung**

Die Erfindung betrifft ein Verfahren zum Laserschneiden eines Werkstücks (12) mit einer Laserschneiddüse (28), wobei aus der Laserschneiddüse (28) entlang einer Strahlrichtung (62) ein erster Laserstrahl (18), ein zweiter Laserstrahl (20) und ein Gasstrahl (22) auf eine Eintrittsoberfläche (24) des Werkstücks (12) gerichtet werden, wobei ein Arbeitsabstand (78) zwischen der Laserschneiddüse (28) und der Eintrittsoberfläche (24) in einem Bereich zwischen 1 mm und 50 mm eingestellt wird, und wobei ein Staudruck des Gasstrahls (22) an der Eintrittsoberfläche (24) von mehr als 2 bar wirkt.

## Beschreibung

Die Erfindung betrifft ein Verfahren zum Laserschneiden eines Werkstücks, eine Verwendung einer Laserschneidanlage und eine Laserschneidanlage.

Aus der WO 2021/228 829 A1 ist ein Verfahren zum Laserschneiden von dreidimensional geformten Blechen mit zwei Laserstrahlen und einem Gasstrahl bekannt, welches eine hohe Schneidgeschwindigkeit und eine gute Schnittqualität vereint. Aufgrund der Komplexität der Geometrie der zu bearbeitenden Werkstücke und der erhöhten Schneidgeschwindigkeit kommt der Planung und der Überwachung der Bewegungsbahn des Schneidwerkzeugs eine signifikante Relevanz zu, um Kollisionen zwischen dem Schneidwerkzeug und dem Werkstück zu verhindern.

Der Erfindung liegt die Aufgabe zugrunde, ein Verfahren zum Laserschneiden mit einer geringen Wahrscheinlichkeit zur Kollision mit dem zu bearbeitenden Werkstück bereitzustellen.

Die der Erfindung zugrundeliegende Aufgabe wird gelöst durch einen Gegenstand des Anspruchs 1. Das Verfahren zum Laserschneiden eines, insbesondere dreidimensional geformten, Werkstücks umfasst eine Laserschneiddüse. Es wird aus der Laserschneiddüse entlang einer Strahlrichtung wenigstens ein erster Laserstrahl, wenigstens ein zweiter Laserstrahl und wenigstens ein Gasstrahl auf eine Eintrittsoberfläche des Werkstücks gerichtet. Dabei wird ein Arbeitsabstand zwischen der Laserschneiddüse und der Eintrittsoberfläche in einem Arbeitsabstandsbereich zwischen 1 mm und 50 mm eingestellt. Unter Verwendung einer einzigen Laserschneiddüse wirkt über den gesamten Arbeitsabstandsbereich an der Eintrittsoberfläche ein Staudruck des Gasstrahls von mehr als 2 bar.

In einem ersten Verfahren kann der gesamte Arbeitsabstandsbereich ausgenutzt werden. In einem zweiten Verfahren kann ein Teil des Arbeitsabstandsbereichs, insbesondere ein Bereich zwischen 20 mm und 50 mm, ausgenutzt werden. Es ist dabei wesentlich, dass in dem gewählten Arbeitsabstandsbereich mittels einer Laserschneiddüse ein Staudruck des Gasstrahls von mehr als 2 bar an der Eintrittsoberfläche sichergestellt ist.

Überraschenderweise haben Versuche ergeben, dass eine gleichbleibende Schnittqualität auch bei einem Arbeitsabstand von bis zu 50 mm erzielt werden kann, wenn der Staudruck an der Eintrittsoberfläche, insbesondere durchgängig, mehr als 2 bar beträgt. Ferner geht damit der Vorteil einher, dass die Laserschneiddüse im Gegensatz zum Stand der Technik einen wesentlich größeren Arbeitsabstand zum Werkstück aufweisen kann. In dem Fall ist die Planung und Programmierung der Bewegungsbahn der Laserschneiddüse erheblich vereinfacht, da eine deutlich größere Flexibilität im Arbeitsabstand vorliegt. Zudem kann die Bewegungsbahn der Laserschneiddüse verschliffen werden. Aufgrund des größeren Arbeitsabstandes wird das Risiko für eine Kollision mit dem Werkstück signifikant reduziert. Ferner kann auf Grund der Bereitstellung des Staudrucks auf einer Abstandsregelung des Arbeitsabstands verzichtet werden, was zu einer Kosteneinsparung führt. Dies bietet ferner eine Lösung für eine 2D- und/oder 3D-Laserschneidanlage.

Der Staudruck bzw. der wirksame Staudruck ist bspw. auf einem Prüfstand mit einer Prallplatte ermittelbar, wobei die Prallplatte so ausgerichtet ist, dass sie dem Gasstrahl und insbesondere den Laserstrahlen direkt ausgesetzt ist. Der Gasstrahl und/oder die Laserstrahlen werden auf die Probeoberfläche gerichtet, wodurch ein wirksamer Staudruck auf der Probeoberfläche wirkt, der eine messbare Kraft oder Verformung erzeugt. Sensoren, die an der Prallplatte angebracht sind, erfassen diese Kraft oder Verformung. Die so erlangten Sensordaten werden statistisch analysiert, um den, insbesondere mittleren, Staudruck sowie mögliche Schwankungen zu ermitteln.

Der Staudruck wird vorzugsweise in Abhängigkeit des in der Laserschneiddüse wirkenden Kesseldrucks und/oder der inneren Geometrie der Laserschneiddüse eingestellt. Die Laserschneiddüse ist vorzugsweise als Lavaldüse ausgebildet. Es ist vorteilhaft, wenn der Staudruck über einen wesentlichen Teil, insbesondere über den gesamten Teil, des Verfahrens mehr als 2 bar beträgt. Das Werkstück wird vorzugsweise entlang einer dreidimensional verlaufenden Schnittlinie geschnitten. Das Laserschneiden erfolgt vorzugsweise durch Laserschmelzschneiden. Beim Laserschmelzschneiden wird zur Ausbildung eines Schnittspalts der Werkstoff des Werkstücks aufgeschmolzen und in flüssiger Form aus dem Schnittspalt ausgeblasen. Das Werkstück kann ein Blech sein, insbesondere ein dreidimensional geformtes Blech. Das Werkstück besteht vorzugsweise aus einem metallischen und/oder elektrisch leitfähigen Werkstoff. Das erfindungsgemäße Verfahren wird vorzugsweise mit einer unten beschriebenen, erfindungsgemäßen Laserschneidanlage durchgeführt.

Bei dem Laserschneidverfahren werden ein erster Laserstrahl, ein zweiter Laserstrahl und ein Gasstrahl auf eine Eintrittsoberfläche des Werkstücks gerichtet. Die beiden Laserstrahlen und der Gasstrahl bewirken ein Schmelzen und Entfernen von Material von dem Werkstück, sodass ein Schnittspalt ausgebildet wird. Die Eintrittsoberfläche ist diejenige Oberfläche des Werkstücks, auf welche die Strahlen auftreffen. Nach Ausbildung des Schnittspalts treten Anteile der Strahlen typischerweise an der gegenüberliegenden Austrittsoberfläche aus dem Werkstück aus. Typischerweise sind der erste und der zweite Laserstrahl jeweils durch einen einzigen Laserstrahl gebildet. Alternativ können jedoch der erste und/oder insbesondere der zweite Laserstrahl jeweils aus mehreren Teilstrahlen bestehen. Die beiden Laserstrahlen können mit einer gemeinsamen Laserlichtquelle erzeugt und durch einen Strahlteiler voneinander getrennt werden. Alternativ kann jeder der beiden Laserstrahlen mit einer separaten Laserlichtquelle erzeugt werden. Das in dem Gasstrahl auf die Eintrittsoberfläche gerichtete bzw. in den Schnittspalt eingeblasene Schneidgas kann beispielsweise Stickstoff oder Druckluft sein. In Sonderfällen kann das Schneidgas auch Argon oder Sauerstoff sein.

Es ist vorteilhaft, wenn die beiden Laserstrahlen aus einer Mehrkernfaser mit einem ersten Faserkern für den ersten Laserstrahl und einem zweiten Faserkern für den zweiten Laserstrahl austreten. Die Mehrkernfaser kann parallel zueinander verlaufende Fasern aufweisen. Vorzugsweise umgibt der zweite Faserkern den ersten Faserkern. Mit anderen Worten ist der erste Faserkern radial innerhalb des zweiten Faserkerns angeordnet. Der zweite Faserkern ist mithin als eine Ringfaser ausgebildet und umgibt den ersten Faserkern ringförmig. Insbesondere können der erste und der zweite Faserkern konzentrisch zueinander ausgebildet sein. Demnach kann das Schneidgas effizienter in die Schnittfuge eingekoppelt werden.

Der erste Faserkern, aus dem der erste Laserstrahl austritt, weist vorzugsweise einen Faserdurchmesser von wenigstens 30 µm und/oder höchstens 100 µm, insbesondere 75 µm, auf. Der zweite Faserkern, aus dem der zweite Laserstrahl austritt, weist vorzugsweise einen Faserdurchmesser von wenigstens 150 µm und/oder höchstens 350 µm, insbesondere 300 µm, auf.

Es ist ferner vorteilhaft, wenn der Arbeitsabstand zwischen der Eintrittsoberfläche und der Laserschneiddüse größer als 2 mm, insbesondere größer als 5 mm, bevorzugt größer als 6 mm, und/oder in einem Bereich zwischen 2 mm und 50 m, bevorzugt zwischen 1 mm und 20 mm, eingestellt ist. Der Arbeitsabstand kann vorzugsweise zwischen 1 mm und 8 mm eingestellt sein. Folglich ist ein im Wesentlichen konstanter Staudruck gewährleistet.

Eine vorteilhafte Weiterbildung sieht vor, dass der Staudruck des Gasstrahls an der Eintrittsoberfläche auf mehr als 3 bar, insbesondere mehr als 3,5 bar, bevorzugt mehr als 4 bar, eingestellt ist. Demnach ist sichergestellt, dass das Material des Werkstücks zuverlässig aus dem Schnittspalt ausgeblasen wird, insbesondere ohne dass an der Austrittsoberfläche ein Grat entsteht.

Vorzugsweise ist der Gasstrahl parallel zur Strahlrichtung auf die Eintrittsoberfläche gerichtet. Ein derartiger Gasstrahl ist vorzugsweise mittels einer als Lavaldüse ausgebildeten Laserschneiddüse bereitstellbar. Die Lavaldüse weist eine Innenkontur bzw. einen Durchgang auf, welcher einen konvergenten Abschnitt und einen divergenten Abschnitt sowie eine Engstelle zwischen beiden Abschnitten aufweist. Mittels der Lavaldüse kann ein Gasstrahl mit einer zur Strahlrichtung zumindest im Wesentlichen parallel verlaufenden Form sowie mit einem hohen Druck, insbesondere auch über einen Arbeitsabstand von bis zu 50 mm, gebildet werden. Eine Kombination einer Laserlichtquelle mit zwei Faserkernen und einer als Lavaldüse ausgebildeten Laserschneiddüse ist besonders vorteilhaft für das Laserschneiden in einem Bereich zwischen 2 mm und 50 mm, wobei insbesondere dabei durchgängig ein Staudruck von mehr als 2 bar an der Eintrittsoberfläche bereitgestellt werden kann.

Eine Lavaldüse umfasst vorzugsweise einen Düseneingang mit einem Eingangsdurchmesser und einen Düsenausgang mit einem Ausgangsdurchmesser sowie einen den Düseneingang und den Düsenausgang fluidisch verbindenden, entlang einer Strömungsrichtung verlaufenden Düsenkanal mit einem Kompressionsabschnitt und einem Expansionsabschnitt. Der Kompressionsabschnitt verjüngt sich vorzugsweise entlang der Strömungsrichtung und der Expansionsabschnitt verjüngt sich entgegen der Strömungsrichtung hin zu einer Engstelle. Die Engstelle weist vorzugsweise einen Engstellendurchmesser auf, welcher vorzugsweise den kleinsten Durchmesser des Düsenkanals abbildet. Der Kompressionsabschnitt weist vorzugsweise eine Kompressionslänge und der Expansionsabschnitt weist vorzugsweise eine Expansionslänge auf. Das Verhältnis zwischen der Kompressionslänge und der Expansionslänge ist vorzugsweise kleiner als 0,6.

Überraschenderweise hat sich in einer Vielzahl von Versuchen herausgestellt, dass bei der Verwendung einer derartigen Lavaldüse in einem Laserbearbeitungsprozess ein im Wesentlichen konstanter Staudruck über 2 bar auch bei einem Arbeitsabstandsbereich zwischen 1 mm und 50 mm aufrechterhalten wird. Demnach kann mittels der Lavaldüse sowohl bei niedrigen Arbeitsabständen im Bereich zwischen 1 mm und 6 mm, als auch bei hohen Arbeitsabständen im Bereich zwischen 20 mm und 50 mm ein minimaler Staudruck gewährleistet werden.

Ferner vorteilhaft ist die Position der Innenkontur der Lavaldüse entlang der Strömungsrichtung beliebig einstellbar, wobei die Außenkontur der Lavaldüse beliebig gestaltet werden kann. Zudem ist ein Schrägschneiden mit einem Anstellwinkel bis zu 30° denkbar.

Im Sinne der Erfindung ist unter einer Lavaldüse eine Laserschneiddüse mit einer Lavalkontur als Innenkontur zu verstehen.

Es ist vorteilhaft, wenn das Verhältnis zwischen der Kompressionslänge und der Expansionslänge in einem Bereich zwischen 0,2 und 0,6, insbesondere bei 0,5, liegt. Es hat sich überraschenderweise herausgestellt, dass ein derartiges Längenverhältnis einen besonders positiven Effekt auf die Konstanz des Staudrucks des Gasstrahls hat.

Es ist vorteilhaft, wenn die Verjüngung des Kompressionsabschnitts und/oder des Expansionsabschnitts stetig ausgebildet ist. Demnach ist eine optimale Strömung des Gasstrahls gewährleistet. Alternativ ist es denkbar, dass der Kompressions- und/oder Expansionsabschnitt konisch oder in Stufen ausgebildet ist.

Es ist vorteilhaft, wenn die Kompressionslänge in einem Bereich zwischen 2 mm und 10 mm, insbesondere zwischen 3 mm und 7 mm, vorzugsweise bei 5 mm, liegt.

Es ist vorteilhaft, wenn die Expansionslänge in einem Bereich zwischen 5 mm und 20 mm, insbesondere zwischen 8 mm und 15 mm, bevorzugt zwischen 10 mm und 15 mm, vorzugsweise bei 10 mm, liegt.

Es ist vorteilhaft, wenn die Lavaldüse eine zwischen dem Düseneingang und dem Düsenausgang erstreckende Düsenlänge aufweist, wobei die Düsenlänge in einem Bereich zwischen 11,5 mm und 20 mm, insbesondere zwischen 13 mm und 17 mm, vorzugsweise bei 15 mm, liegt. Wenn die Lavaldüse keinen Zylinderabschnitt aufweist, entspricht die Düsenlänge der Summe aus der Kompressionslänge und der Expansionslänge.

Es ist vorteilhaft, wenn der Kompressionsabschnitt sich vom Düseneingang bis zur Engstelle erstreckt. Ein vorteilhafter Aspekt der Erfindung sieht vor, dass der Expressionsabschnitt sich von der Engstelle bis zum Düsenausgang erstreckt. Demnach ist die gesamte Düsenlänge als strömungsrelevant ausgebildet. Alternativ kann ein Zylinderabschnitt mit einem konstanten Zylinderdurchmesser zwischen dem Düseneingang und dem Kompressionsabschnitt vorgesehen sein, welcher zumindest im Wesentlichen strömungsirrelevant ist.

Es ist vorteilhaft, wenn der Engstellendurchmesser in einem Bereich zwischen 1 mm und 3 mm, insbesondere zwischen 1,4 mm und 2,6 mm, vorzugsweise bei 1,8 mm, liegt. Vorzugsweise ist der Engstellendurchmesser größer als 1,8 mm ausgebildet. Dabei sind besonders gassparende Laserschneidprozesse realisierbar.

Es ist vorteilhaft, wenn das Flächenverhältnis des Düsenkanals zwischen der Engstelle und dem Düseneingang kleiner als 40%, insbesondere kleiner als 30%, vorzugsweise kleiner als 25%, ist.

Es ist vorteilhaft, wenn das Flächenverhältnis des Düsenkanals zwischen dem Düsenausgang und der Engstelle größer als 120%, insbesondere größer als 150%, vorzugsweise größer als 200%, ist. Demnach ist eine hinreichende Kompression des Schneidgases und/oder ein Staudruck über 2 bar sichergestellt.

Es ist vorteilhaft, wenn am Düseneingang und/oder am Düsenausgang und/oder an der Engstelle ein Zylinderabschnitt mit einem konstanten Zylinderdurchmesser vorgesehen ist. Demnach ist die Düsenlänge der Lavaldüse individuell auf den Laserbearbeitungsprozess einstellbar.

Es ist vorteilhaft, wenn der Düsenkanal im Querschnitt ellipsenförmig oder rotationssymmetrisch ausgebildet ist. Bei einem rotationssymmetrischen Querschnitt ist die Lavaldüse richtungsunabhängig einsetzbar.

Das zu bearbeitende Werkstück weist eine Werkstückdicke auf, welche vorzugsweise gleich oder weniger als 20 mm, insbesondere gleich oder weniger 6 mm und bevorzugt gleich oder weniger 2 mm beträgt. Das Werkstück kann vorzugsweise metallisch oder nicht-metallisch ausgebildet sein, insbesondere aus LSN-CFK oder LSN-Nichtmetallen hergestellt sein. Falls das Werkstück nicht-metallisch ist, kann die Nachführung gröber ausfallen.

Es ist vorteilhaft, wenn der Arbeitsabstand während des Laserschneidens variiert wird. Die Variation des Arbeitsabstands beträgt vorzugsweise wenigstens 1 mm, 2 mm, 3 mm, 4 mm, 7 mm oder 10 mm. Damit geht eine höhere Flexibilität bei der Planung der Bewegungsbahn einher. Zudem kann der Arbeitsabstand je nach Bearbeitungsbedingung, insbesondere Werkstückdicke, Schnittqualität, Linearschnitt/Eckenfahrt etc. variiert werden. Es ist vorteilhaft, wenn bei der Änderung des Arbeitsabstands die Fokuslage des ersten Laserstrahls und/oder des zweiten Laserstrahls, insbesondere die Fokuslage der Laserstrahltaille, relativ zur Eintrittsoberfläche nachgeführt wird. Aufgrund der Variation des Arbeitsabstands kann die Bewegungsbahn der Laserschneiddüse weiter verschliffen werden.

Es ist ferner vorteilhaft, wenn eine Laserstrahl-Divergenz des ersten Lichtstrahls und/oder des zweiten Lichtstrahls gleich oder kleiner als 100 mrad eingestellt ist. Damit wird eine hohe Prozessstabilität, insbesondere bei der Verwendung von Laserstrahlen mit gesteigerter Rayleigh-Länge, sichergestellt.

Vorzugsweise wird zum Bereitstellen des Gasstrahls ein Schneidgas mit einem Kesseldruck von wenigstens 12 bar, insbesondere wenigstens 16 bar und/oder höchstens 35 bar, insbesondere höchstens 22 bar, eingangsseitig der Laserschneiddüse zugeführt.

Es ist zudem vorteilhaft, wenn das Strahlparameterprodukt des ersten Laserstrahls und/oder des zweiten Laserstrahls gleich oder kleiner als 2 mm*mrad eingestellt wird.

Die der Erfindung zugrundeliegende Aufgabe wird ebenfalls durch eine Verwendung einer Laserschneidanlage zur Bearbeitung von, insbesondere metallischen und/oder nichtmetallischen, Werkstücken mit einem variablen Arbeitsabstand mit den Merkmalen nach Anspruch 12 gelöst. Die Laserschneidanlage weist eine Laserquelle und eine Laserschneiddüse auf. Der Arbeitsabstand erstreckt sich zwischen einer Eintrittsoberfläche des Werkstücks und, insbesondere einer Mündung, der Laserschneiddüse und liegt dabei in einem Bereich zwischen 1 mm und 50 mm, vorzugsweise zwischen 2 mm und 50 mm, insbesondere zwischen 2 mm und 20 mm. Der Arbeitsabstand kann vorzugsweise zwischen 1 mm und 8 mm eingestellt sein. Die aus dem Stand der Technik bekannten Laserschneidanlagen werden mit einem Arbeitsabstand von unter 2 mm für das Laserschneiden verwendet.

Die Laserquelle weist einen ersten Faserkern und einen den ersten Faserkern umgebenden zweiten Faserkern auf, wobei der erste Faserkern zur Erzeugung eines parallel zu einer Strahlrichtung verlaufenden ersten Laserstrahls und der zweite Faserkern zur Erzeugung eines parallel zur Strahlrichtung verlaufenden, den ersten Laserstrahl ringförmig umgebenden zweiten Laserstrahls mit einer Laserstrahlung beaufschlagbar oder beaufschlagt ist. Die Laserschneiddüse weist eine als Lavalkontur ausgebildete Innenkontur zur Erzeugung eines parallel zur Strahlrichtung verlaufenden Gasstrahls auf, wobei der Gasstrahl und/oder der erste Laserstrahl und/oder der zweite Laserstrahl vorzugsweise koaxial zueinander ausgebildet sind.

Aufgrund der überraschenden Erkenntnisse in den Untersuchungen kann eine Laserschneidanlage auch mit einem größeren Arbeitsabstand als 2 mm sicher verwendet werden, wobei sich dadurch das Risiko für eine Kollision mit dem Werkstück reduziert.

Es ist vorteilhaft, wenn die Laserschneidanlage, insbesondere die Laserschneiddüse, derart eingerichtet ist, dass bei einem Arbeitsabstand zwischen 2 mm und 50 mm ein Staudruck des Gasstrahls an der Eintrittsoberfläche von mehr als 2 bar, insbesondere mehr als 3 bar, bevorzugt mehr als 3,5 bar, und vorzugsweise mehr als 4 bar, vorliegt.

Es ist ferner vorteilhaft, wenn die Laserschneiddüse einen Düsendurchmesser von wenigstens 1,6 mm und/oder höchstens 18 mm aufweist und/oder der Laserschneiddüse eingangsseitig ein Schneidgas mit einem in der Laserschneiddüse wirkenden Kesseldruck von wenigstens 12 bar, insbesondere 15 bar, zuführbar oder zugeführt ist. Durch eine Verwendung einer 1,6 mm Düse und/oder einem Kesseldruck von 12 bar kann eine Senkung des Schneidgasverbrauchs um 50% gegenüber herkömmlichen Anlagen erzielt werden. Damit geht eine erhebliche Kostensenkung beim Betrieb der Anlage einher.

Eine weitere vorteilhafte Ausbildung sieht vor, dass die Laserschneiddüse nichtmetallisch ausgebildet ist. Die Laserschneiddüse ist vorzugsweise in einem additiven Herstellungsverfahren und/oder aus einem Kunststoff hergestellt. Demnach kann ein alternatives, kostengünstiges Herstellungsverfahren bereitgestellt werden. Vorzugsweise kann auf eine isolierende Keramik an der Laserschneiddüse verzichtet werden. Es ergibt sich dadurch eine größere Freiheit bei der Gestaltung der Laserschneiddüse.

Die der Erfindung zugrundeliegende Aufgabe wird ebenfalls durch eine Laserschneidanlage zum Laserschneiden eines Werkstücks nach den Merkmalen des Anspruchs 16 gelöst. Die Laserschneidanlage weist eine Laserquelle und eine Laserschneidedüse auf, wobei die Laserquelle einen ersten Faserkern und einen den ersten Faserkern umgebenden zweiten Faserkern aufweist, wobei der erste Faserkern zur Erzeugung eines parallel zu einer Strahlrichtung verlaufenden ersten Laserstrahls und der zweite Faserkern zur Erzeugung eines parallel zur Strahlrichtung verlaufenden, den ersten Laserstrahl ringförmig umgebenden zweiten Laserstrahls mit einer Laserstrahlung beaufschlagbar oder beaufschlagt ist, wobei die Laserschneiddüse als Lavaldüse zur Erzeugung eines parallel zur Strahlrichtung verlaufenden Gasstrahls ausgebildet ist, und wobei die Laserschneidanlage derart eingerichtet ist, dass, wenn ein Arbeitsabstand zwischen der Laserschneiddüse und einer Eintrittsoberfläche des Werkstücks in einem Bereich zwischen 2 mm und 50 mm liegt, ein Staudruck des Gasstrahls auf der Eintrittsoberfläche mehr als 2 bar beträgt.

Weitere Einzelheiten und vorteilhafte Ausgestaltungen der Erfindung sind der nachfolgenden Beschreibung zu entnehmen, anhand derer Ausführungsbeispiele der Erfindung weiter beschrieben und erläutert sind.

Es zeigen:
- Fig. 1.: eine schematische Ansicht eines Verfahrens zum Laserschweißen;
- Fig. 2.: eine schematische Querschnittsansicht durch eine Mehrkernfaser einer Laserlichtquelle;
- Fig. 2A: eine schematische Querschnittsansicht durch einen ersten Laserstrahl und durch einen zweiten Laserstrahl
- Fig. 3.: eine schematische Ansicht einer Laserschneiddüse;
- Fig. 4.: ein schematisches Ablaufdiagramm eines Verfahrens zum Laserschneiden; und
- Fign. 5-7: weitere schematische Ansichten einer Laserschneiddüse.

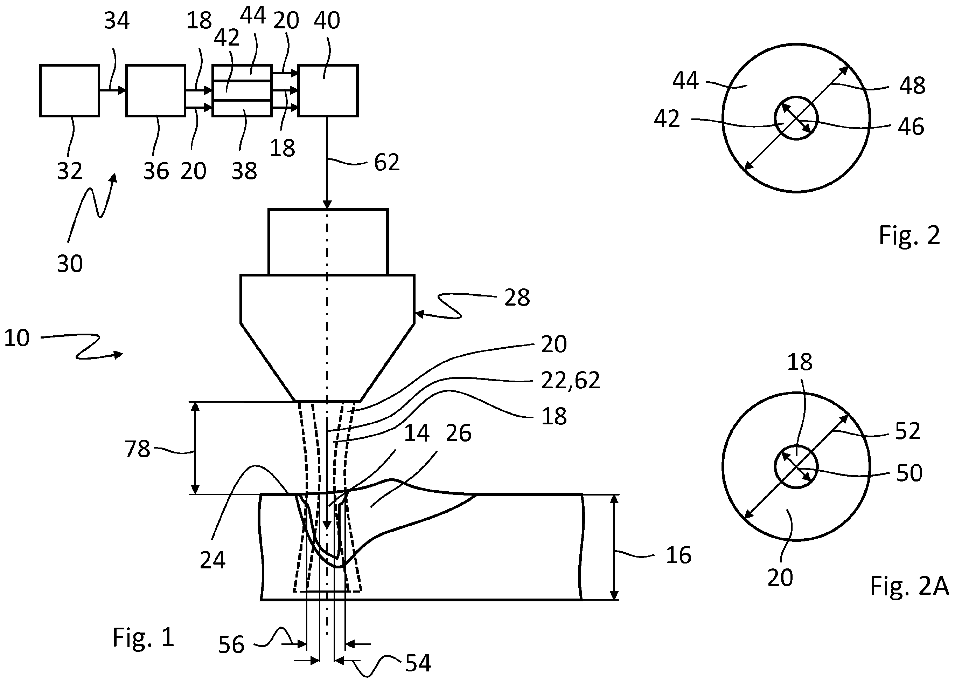

Eine Laserschneidanlage 10 ist gemäß Fig. 1 in einem Verfahren zum Laserschneiden eines Werkstücks 12. Bei dem Verfahren zum Laserschneiden wird ein Schnittspalt 14 in das Werkstück 12 eingebracht, um das Werkstück zuzuschneiden. Das Werkstück 12 ist blechförmig ausgebildet und weist eine Werkstückdicke 16 auf, welche weniger als 6 mm, insbesondere weniger als 4 mm und bevorzugt weniger als 2 mm beträgt. Das Werkstück 12 kann zumindest bereichsweise in nicht näher dargestellter Weise dreidimensional gekrümmt sein.

Um den Schnittspalt 14 in dem Werkstück 12 zu erzeugen, werden gemäß Fig. 1 ein erster Laserstrahl 18, ein zweiter Laserstrahl 20 und ein Gasstrahl 22 auf eine Eintrittsoberfläche 24 des Werkstücks 12 gerichtet. Die beiden Laserstrahlen 18, 20 und typischerweise auch der Gasstrahl 22 überlappen einander dabei in einer Schneidzone 26. Beim Laserschmelzschneiden wird das Material des Werkstücks 12 in der Schneidzone 26 verflüssigt und unter Ausbildung des Schnittspalts 14 von dem Gasstrahl 22 ausgetrieben.

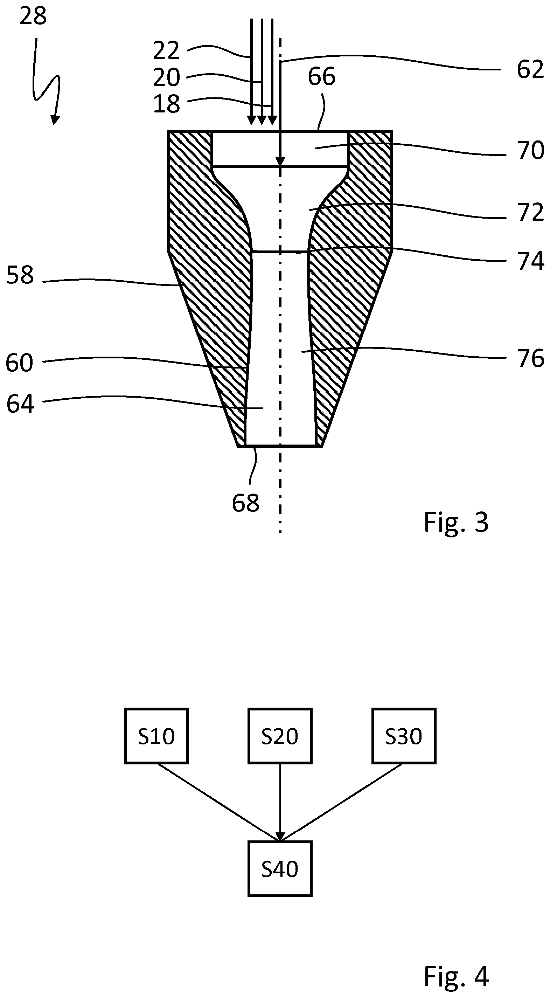

Gemäß Fig. 4 werden in einem Schritt S10 der erste Laserstrahl 18 erzeugt und auf die Eintrittsoberfläche 24 des Werkstücks 12 gerichtet. In einem Schritt S20 wird der zweite Laserstrahl 20 erzeugt und auf die Eintrittsoberfläche 24 des Werkstücks 12 gerichtet. In einem Schnitt S30 wird der Gasstrahl 22 erzeugt und auf die Eintrittsoberfläche 24 des Werkstücks 12 gerichtet. Der Gasstrahl 22 sowie die beiden Laserstrahlen 18, 20 treten dabei aus einer Laserschneiddüse 28 austreten. Die beiden Laserstrahlen 18, 20 und der Gasstrahl 22 überlappen einander in der Schneidzone 26. Durch die beiden Laserstrahlen 18, 20 und den Gasstrahl 22 wird in einem Schritt S40 der Schnittspalt 14 in dem Werkstück 12 erzeugt. Die Schritte S10, S20, S30 und der sich aus diesen Schritten ergebende Schritt S40 werden grundsätzlich gleichzeitig durchgeführt.

Die beiden Laserstrahlen 18, 20 werden gemäß Fig. 1 von einer Laserlichtquelleneinrichtung 30 erzeugt. Die Laserlichtquelleneinrichtung 30 weist hier eine einzige Laserlichtquelle 32, beispielsweise einen Festkörperlaser, auf. Die Laserlichtquelle 32 sendet einen einzigen Ausgangslaserstrahl 34 aus. In einem Strahlteiler 36 wird der Ausgangslaserstrahl 34 in den ersten Laserstrahl 18 und den zweiten Laserstrahl 20 aufgeteilt. Die beiden Laserstrahlen 18, 20 werden mit einer Mehrkernfaser 38 zu einer Optik 40 geführt, wobei anschließend die Laserstrahlen 18, 20 in die Laserschneiddüse 28 münden und von dort auf die Eintrittsoberfläche 24 gerichtet sind.

Die Mehrkernfaser 38 weist gemäß Fig. 2 einen ersten Faserkern 42 für den ersten Laserstrahl 18 und einen zweiten Faserkern 44 für den zweiten Laserstrahl 20 auf. Der zweite Faserkern 44 ist hier als eine Ringfaser ausgebildet, welche den ersten Faserkern 42 umlaufend bzw. umschließend umgibt. Der erste und der zweite Faserkern 42, 44 können konzentrisch zueinander angeordnet sein. Der erste Faserkern 42, aus dem der erste Laserstrahl 18 austritt, weist vorzugsweise einen ersten Faserdurchmesser 46 von wenigstens 30 µm und/oder höchstens 100 µm, insbesondere 75 µm, auf. Der zweite Faserkern 44, aus dem der zweite Laserstrahl 20 austritt, weist vorzugsweise einen zweiten Faserdurchmesser 48 von wenigstens 150 µm und/oder höchstens 350 µm, insbesondere 300 µm, auf. Die Fokuspunkte der beiden Laserstrahlen 18, 20 können in einem Punkt liegen.

Ein erster Strahldurchmesser 50 des ersten Laserstrahls 18 ist im Bereich des zu schneidenden Werkstücks 12 kleiner als ein zweiter Strahldurchmesser 52 des zweiten Laserstrahls 20. Insbesondere ist ein erster Fokusdurchmesser 54 des ersten Laserstrahls 18 kleiner als ein zweiter Fokusdurchmesser 56 des zweiten Laserstrahl 20. Der erste Fokusdurchmesser 54 des zweiten Laserstrahls 20 kann 4-mal so groß sein wie der zweite Fokusdurchmesser 56 des ersten Laserstrahls 18. Das Strahlparameterprodukt des ersten Laserstrahls 18 und/oder des zweiten Laserstrahls 20 beträgt weniger als 5 mm*mrad, hier beispielsweise 2 mm*mrad.

Die Laserstrahl-Divergenz des ersten Laserstrahl 18 und/oder des zweiten Laserstrahls 20 ist vorzugsweise kleiner als 100 mrad ausgebildet. Die Laserstrahl-Divergenz und/oder die Strahldurchmesser 50, 52 nähern sich aneinander an und sind im Fernfeld gleich groß.

Ein Leistungsanteil des zweiten Laserstrahls 20 an der Gesamtlaserleistung (der Summe der Laserleistungen der beiden Laserstrahlen 18, 20) beträgt weniger als 20%. Bei einer Werkstückdicke 16 des Werkstücks 12 von 2 mm kann der Leistungsanteil des zweiten Laserstrahls 20 beispielsweise 5% betragen.

Gemäß Fig. 3 kommt eine Laserschneiddüse 28, vorzugsweise in Form einer Einlochdüse, zum Einsatz, welche eine im Wesentlichen kegelförmige Außenkontur 58 und eine lavalförmige Innenkontur 60 aufweist. Die Laserschneidedüse 28 ist einstückig ausgebildet und vorzugsweise in einem additiven Herstellungsverfahren aus einem Kunststoff hergestellt. Die Laserschneiddüse 28 ist vorzugsweise rotationssymmetrisch zu einer Strahlrichtung 62 ausgebildet. Die Laserschneiddüse 28 weist einen durch die Innenkontur 60 gebildeten mittigen Durchgang 64 auf, durch welchen die Laserstrahlen 18, 20 und ein Schneidgas hindurchgeführt werden. Der Durchgang 64 erstreckt sich von einem oberen Düseneingang 66 zu einer unteren Düsenmündung 68. Der Durchgang 64 weist einen zylindrischen Einlaufabschnitt 70, einen kontinuierlich konvergierenden Konvergenzabschnitt 72, eine Engstelle 74 sowie einen kontinuierlich divergierenden Divergenzabschnitt 76 auf. Der Durchgang 64 weist über seine gesamte Erstreckung entlang der Strahlrichtung einen kreisförmigen oder ellipsenförmigen Querschnitt auf. Der Konvergenzabschnitt 72 geht kontinuierlich und kantenlos und allmählich an der Engstelle 74 in den Divergenzabschnitt 76 über.

Die Laserschneiddüse 28 ist vorzugsweise derart ausgebildet, dass über einen zwischen der Laserschneiddüse 28 und der Eintrittsoberfläche 24 des Werkstücks 12 erstreckende Arbeitsabstand 78 zwischen 2 mm und 50 mm eine homogene Gasströmung mit einem Staudruck an der Eintrittsoberfläche 24 von mehr als 2 bar bereitgestellt wird. Die Laserschneidedüse 28 ist vorzugsweise für einen Umgebungsdruck von weniger als 2 bar, bevorzugt für 1,013 bar ausgelegt.

Vorzugsweise ist der Arbeitsabstand 78 größer als 1 mm, insbesondere größer als 5 mm, bevorzugt größer als 6 mm, und/oder in einem Bereich zwischen 1 mm und 50 mm, vorzugsweise zwischen 2 mm und 50 mm, insbesondere zwischen 5 mm bis 11 mm, bevorzugt zwischen 5 mm und 8 mm, eingestellt. Der Arbeitsabstand 78 kann beispielsweise zwischen 1 mm und 8 mm eingestellt sein. Folglich ist ein wenigstens im Wesentlichen konstanter Staudruck gewährleistet.

Vorzugsweise ist der Staudruck auf mehr als 3 bar, insbesondere mehr als 3,5 bar, bevorzugt mehr als 4 bar, eingestellt. Demnach ist sichergestellt, dass das Material des Werkstücks 12 zuverlässig aus dem Schnittspalt 14 ausgeblasen wird, insbesondere ohne dass an der Austrittsoberfläche ein Grat entsteht. Zur Bereitstellung des Staudrucks kann die Laserschneiddüse 28 eingangsseitig ein Schneidgas mit einem Kesseldruck von wenigstens 12 bar, insbesondere 15 bar, zugeführt werden. Durch eine Verwendung einer 1,6 mm Düse und/oder einem Kesseldruck von 12 bar kann eine Senkung des Schneidgasverbrauchs um 50% gegenüber herkömmlichen Anlagen erzielt werden. Damit geht eine erhebliche Kostensenkung beim Betrieb der Anlage einher.

Gemäß Fig. 1 werden der ersten Laserstrahl 18, der zweite Laserstrahl 20 und der Gasstrahl 22 koaxial und/oder parallel zur Strahlrichtung 62 durch die Laserschneiddüse 28 auf die Eintrittsoberfläche 24 des Werkstücks 12 geführt. Damit geht eine optimale Schnittqualität auch bei größeren Arbeitsabständen 78 bis zu 50 mm einher. In dem Fall ist die Planung und Programmierung der Bewegungsbahn der Laserschneiddüse 28 erheblich vereinfacht, da eine deutlich größere Flexibilität im Arbeitsabstand 78 vorliegt. Zudem kann die Bewegungsbahn der Laserschneiddüse 28 verschliffen werden. Aufgrund des größeren Arbeitsabstandes 78 wird das Risiko für eine Kollision mit dem Werkstück 12 signifikant reduziert. Ferner kann auf Grund der Bereitstellung des Staudrucks auf einer Abstandsregelung des Arbeitsabstands 78 verzichtet werden, was zu einer Kosteneinsparung führt.

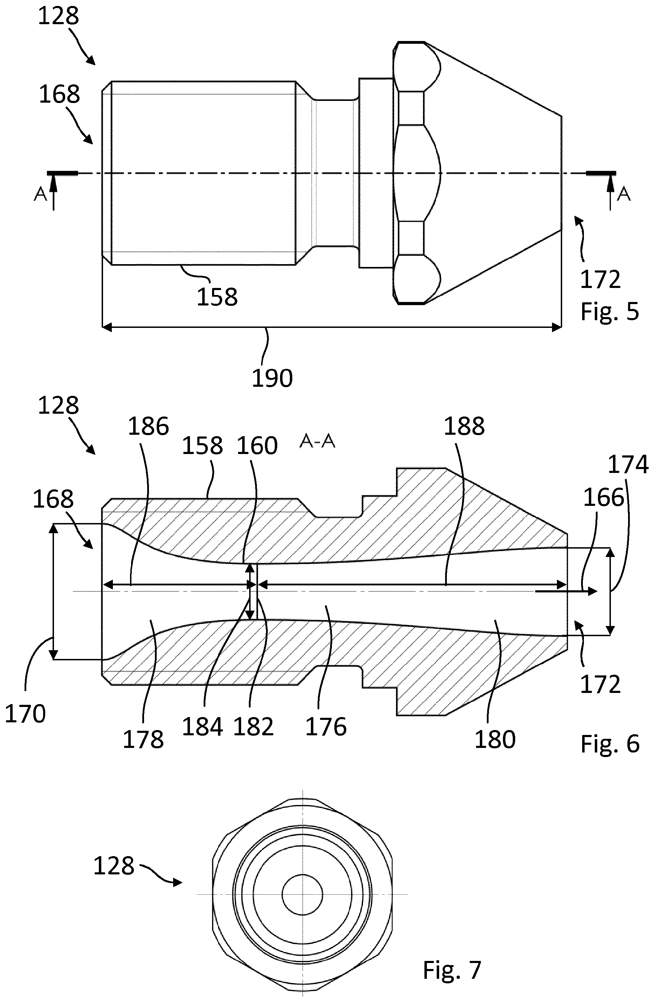

Gemäß Fig. 5 bis 7 kommt eine Laserschneiddüse in Form einer Lavaldüse 128 zum Einsatz, welche eine im Wesentlichen kegelförmige Außenkontur 158 und eine lavalförmige Innenkontur 160 aufweist. Die Lavaldüse 128 ist einstückig ausgebildet und vorzugsweise aus einem Metall oder in einem additiven Herstellungsverfahren aus einem Kunststoff hergestellt. Die Lavaldüse 128 ist vorzugsweise rotationssymmetrisch zur Strömungsrichtung 166 ausgebildet.

Die Lavaldüse 128 ist vorzugsweise derart ausgebildet, dass über einen zwischen der Lavaldüse 128 und der Eintrittsoberfläche 124 des Werkstücks 12 erstreckende Arbeitsabstand 64 zwischen 2 mm und 50 mm eine homogene Gasströmung mit einem im Wesentlichen konstanten Staudruck an der Eintrittsoberfläche 124 von mehr als 2 bar bereitgestellt wird. Die Lavaldüse 128 ist vorzugsweise für einen Umgebungsdruck von weniger als 2 bar, bevorzugt für 1,013 bar ausgelegt.

Die Lavaldüse 128 weist einen Düseneingang 168 mit einem Eingangsdurchmesser 170 und einen Düsenausgang 172 mit einem Ausgangsdurchmesser 174 auf. Ferner weist die Lavaldüse 128 einen den Düseneingang 168 und den Düsenausgang 172 fluidisch verbindenden, entlang einer Strömungsrichtung 66 verlaufenden Düsenkanal 76 mit einem Kompressionsabschnitt 178 und einem Expansionsabschnitt 180 auf. Der Kompressionsabschnitt 178 verjüngt sich entlang der Strömungsrichtung 166 stetig hin zu einer Engstelle 182 mit einem Engstellendurchmesser 184. Der Expansionsabschnitt 80 verjüngt sich entgegen der Strömungsrichtung 66 stetig hin zur Engstelle 182. Die Engstelle 182 bildet definitionsgemäß den kleinsten Durchmesser der Innenkontur 160. Der Kompressionsabschnitt 178 weist eine Kompressionslänge 186 und der Expansionsabschnitt 180 eine Expansionslänge 188 auf. Das Verhältnis zwischen der Kompressionslänge 186 und der Expansionslänge 188 ist kleiner als 0,6 ausgebildet, insbesondere in einem Bereich zwischen 0,2 und 0,55, insbesondere bei 0,5.

Die Kompressionslänge 186 liegt in einem Bereich zwischen 2 mm und 10 mm, insbesondere zwischen 3 mm und 7 mm, vorzugsweise bei 5 mm. Die Expansionslänge 188 liegt in einem Bereich zwischen 5 mm und 20 mm, insbesondere zwischen 8 mm und 15 mm, bevorzugt zwischen 10 mm und 15 mm, vorzugsweise bei 10 mm.

Die Lavaldüse 128 weist eine von dem Düseneingang 168 zum Düsenausgang 172 erstreckende Düsenlänge 190 auf, wobei die Düsenlänge 190 in einem Bereich zwischen 11,5 mm und 20 mm, insbesondere zwischen 13 mm und 17 mm, vorzugsweise bei 15 mm, liegt.

Der Engstellendurchmesser 184 liegt in einem Bereich zwischen 1 mm und 3 mm, insbesondere 1,4mm - 2,6mm, vorzugsweise bei wenigstens 1,8 mm.

Die Lavaldüse 128 weist ein Flächenverhältnis des Düsenkanals 176 zwischen der Engstelle 182 und dem Düseneingang 168 auf, wobei dieses kleiner als 40%, insbesondere kleiner als 30%, vorzugsweise kleiner als 25%, ist. Die Lavaldüse 128 weist zusätzlich oder alternativ ein Flächenverhältnis des Düsenkanals 176 zwischen dem Düsenausgang 172 und der Engstelle 182 auf, welcher größer als 120%, insbesondere größer als 150%, vorzugsweise größer als 200%, ist.

### Bezugszeichenliste

- 10: Laserschneidanlage
- 12: Werkstück
- 14: Schnittspalt
- 16: Werkstückdicke
- 18: erster Laserstrahl
- 20: zweiter Laserstrahl
- 22: Gasstrahl
- 24: Eintrittsoberfläche
- 26: Schneidzone
- 28: Laserschneiddüse
- 30: Laserlichtquelleneinrichtung
- 32: Laserlichtquelle
- 34: Ausgangslaserstrahl
- 36: Strahlteiler
- 38: Mehrkernfaser
- 40: Optik
- 42: erster Faserkern
- 44: zweiter Faserkern
- 46: erster Faserdurchmesser
- 48: zweiter Faserdurchmesser
- 50: erster Strahldurchmesser
- 52: zweiter Strahldurchmesser
- 54: erster Fokusdurchmesser
- 56: zweiter Fokusdurchmesser
- 58: Außenkontur
- 60: Innenkontur
- 62: Strahlrichtung
- 64: Durchgang
- 66: Düseneingang
- 68: Düsenmündung
- 70: Einlaufabschnitt
- 72: Konvergenzabschnitt
- 74: Engstelle
- 76: Divergenzabschnitt
- 78: Arbeitsabstand
- 128: Lavaldüse
- 158: Außenkontur
- 160: Innenkontur
- 166: Strömungsrichtung
- 168: Düseneingang
- 170: Eingangsdurchmesser
- 172: Düsenausgang
- 174: Ausgangsdurchmesser
- 176: Düsenkanal
- 178: Kompressionsabschnitt
- 180: Expansionsabschnitt
- 182: Engstelle
- 184: Engstellendurchmesser
- 186: Kompressionslänge
- 188: Expansionslänge
- 190: Düsenlänge

## Patentansprüche

1. Verfahren zum Laserschneiden eines Werkstücks (12) mit einer Laserschneiddüse (28), wobei aus der Laserschneiddüse (28) entlang einer Strahlrichtung (62) ein erster Laserstrahl (18), ein zweiter Laserstrahl (20) und ein Gasstrahl (22) auf eine Eintrittsoberfläche (24) des Werkstücks (12) gerichtet werden,
wobei ein Arbeitsabstand (78) zwischen der Laserschneiddüse (28) und der Eintrittsoberfläche (24) in einem Arbeitsabstandsbereich zwischen 1 mm und 50 mm eingestellt wird, und
wobei über den gesamten Arbeitsabstandsbereich ein Staudruck des Gasstrahls (22) an der Eintrittsoberfläche (24) von mehr als 2 bar wirkt.

2. Verfahren nach Anspruch 1, wobei der Staudruck des Gasstrahls (22) an der Eintrittsoberfläche von mehr als 2 bar in Abhängigkeit des Kesseldrucks und/oder der inneren Geometrie der Laserschneiddüse (28) eingestellt wird.

3. Verfahren nach Anspruch 1 oder 2, wobei zum Erzeugen des ersten Laserstrahls (18) ein erster Faserkern (42) und zum Erzeugen des zweiten Laserstrahls (20) ein den ersten Faserkern (42) umgebender zweiter Faserkern (44) mit einer Laserstrahlung beaufschlagt wird, wobei vorzugsweise der zweite Laserstrahl (20) den ersten Laserstrahl (18) ringförmig umgibt.

4. Verfahren nach Anspruch 3, wobei der erste Faserdurchmesser (46) des ersten Faserkerns (42) in einem Bereich zwischen 30 µm und 100 µm, insbesondere bei 75 µm, liegt und/oder der zweite Faserdurchmesser (56) des zweiten Faserkerns (44) in einem Bereich zwischen 150 µm und 350 µm, insbesondere bei 300 µm, liegt.

5. Verfahren nach einem der vorherigen Ansprüche, wobei der Staudruck des Gasstrahls (22) an der Eintrittsoberfläche (24) auf mehr als 3 bar, insbesondere mehr als 3,5 bar, bevorzugt mehr als 4 bar, wirkt.

6. Verfahren nach einem der vorherigen Ansprüche, wobei der Arbeitsabstand (78) in einem Bereich zwischen 2 mm und 50 mm, vorzugsweise zwischen 2 mm und 20 mm, insbesondere zwischen 5 mm bis 11 mm, bevorzugt zwischen 5 mm und 8 mm, eingestellt wird.

7. Verfahren nach einem der vorherigen Ansprüche, wobei der Gasstrahl (22) parallel zur Strahlrichtung (62) auf die Eintrittsoberfläche (24), insbesondere mittels der als Lavaldüse ausgebildeten Laserschneiddüse (28), gerichtet ist.

8. Verfahren nach einem der vorherigen Ansprüche, wobei Werkstücke (12) mit einer Werkstückdicke (16) von gleich oder weniger als 4 mm, insbesondere von gleich oder weniger als 2 mm, bearbeitet werden.

9. Verfahren nach einem der vorherigen Ansprüche, wobei der Arbeitsabstand (78) während der Bearbeitung variiert wird.

10. Verfahren nach einem der vorherigen Ansprüche, wobei eine Laserstrahl-Divergenz des ersten Laserstrahls (18) und/oder des zweiten Laserstrahls (20) kleiner als 100 mrad ausgebildet ist.

11. Verfahren nach einem der vorherigen Ansprüche, wobei zum Bereitstellen des Gasstrahls (22) ein Schneidgas mit einem Kesseldruck von wenigstens 12 bar eingangsseitig der Laserschneiddüse (28) zugeführt wird.

12. Verfahren nach einem der vorherigen Ansprüche, wobei das Strahlparameterprodukt des ersten Laserstrahls (18) und/oder des zweiten Laserstrahls (20) gleich oder kleiner als 2 mm*mrad eingestellt wird.

13. Verwendung einer Laserschneidanlage (10) mit einer Laserlichtquelle (32) und einer Laserschneiddüse (28) zum Laserbearbeiten eines Werkstücks (12) mit einem variablen Arbeitsabstand (78) zwischen der Laserschneiddüse (28) und einer Eintrittsoberfläche (24) des Werkstücks (12) in einem Bereich zwischen 1 mm und 50 mm,
wobei die Laserlichtquelle (32) einen ersten Faserkern (42) und einen den ersten Faserkern (42) umgebenden zweiten Faserkern (44) aufweist, wobei der erste Faserkern (42) zur Erzeugung eines parallel zu einer Strahlrichtung (62) verlaufenden ersten Laserstrahls (18) und der zweite Faserkern (44) zur Erzeugung eines parallel zur Strahlrichtung (62) verlaufenden, den ersten Laserstrahl (18) ringförmig umgebenden zweiten Laserstrahls (20) mit einer Laserstrahlung beaufschlagbar oder beaufschlagt ist,
wobei die Laserschneiddüse (28) als Lavaldüse zur Erzeugung eines parallel zur Strahlrichtung (62) verlaufenden Gasstrahls (22) ausgebildet ist.

14. Verwendung nach Anspruch 13, wobei die Laserschneidanlage (10), insbesondere die Laserschneiddüse (28), derart eingerichtet ist, dass bei einem Arbeitsabstand (78) zwischen 1 mm und 50 mm, insbesondere zwischen 1 mm und 20 mm, bevorzugt zwischen 1 mm und 8 mm, ein Staudruck des Gasstrahls (22) an der Eintrittsoberfläche (24) von mehr als 2 bar wirkt.

15. Verwendung nach Anspruch 13 oder 14, wobei die Laserschneiddüse (28) einen Durchmesser von wenigstens 1,6 mm aufweist und/oder der Laserschneiddüse (28) eingangsseitig ein Schneidgas mit einem Kesseldruck von wenigstens 12 bar zuführbar oder zugeführt ist.

16. Verwendung nach einem der Ansprüche 13 bis 15, wobei die Laserschneiddüse (28) metallisch oder nichtmetallisch ausgebildet ist.

17. Laserschneidanlage (10) zum Laserschneiden (28) eines Werkstücks (12) mit einer Laserlichtquelle (32) und einer Laserschneidedüse (28),
wobei die Laserlichtquelle (32) einen ersten Faserkern (42) und einen den ersten Faserkern (42) umgebenden zweiten Faserkern (44) aufweist,
wobei der erste Faserkern (42) zur Erzeugung eines parallel zu einer Strahlrichtung (62) verlaufenden ersten Laserstrahls (18) und der zweite Faserkern (44) zur Erzeugung eines parallel zur Strahlrichtung (62) verlaufenden, den ersten Laserstrahl (18) ringförmig umgebenden zweiten Laserstrahls (20) mit einer Laserstrahlung beaufschlagbar oder beaufschlagt ist,
wobei die Laserschneiddüse (28) als Lavaldüse zur Erzeugung eines parallel zur Strahlrichtung (62) verlaufenden Gasstrahls (22) ausgebildet ist, und
wobei die Laserschneidanlage (10) derart eingerichtet ist, dass, wenn ein Arbeitsabstand (78) zwischen der Laserschneiddüse (28) und einer Eintrittsoberfläche (24) des Werkstücks (12) in einem Bereich zwischen 1 mm und 50 mm liegt, ein Staudruck des Gasstrahls (22) auf der Eintrittsoberfläche mehr als 2 bar beträgt.
